# EUROPEAN PATENT APPLICATION

(11) **EP 4 550 727 A1**
(43) Date of publication of application: **07.05.2025**
(21) Application number: 24209416.7
(22) Date of filing: 29.10.2024
(51) Int. Cl.: H04L 12/40

(54) **COMMUNICATIONS REDUNDANCY BETWEEN NETWORK NODES**

(30) Priority: 02.11.2023 JP 2023188602
(71) Applicant: Yokogawa Electric Corporation, Tokyo 180-8750 (JP)
(72) Inventor: SATO, Atsushi, Musashino-shi, Tokyo, 180-8750, (JP); TOINAGA, Takeshi, Musashino-shi, Tokyo, 180-8750, (JP); YOSHIDA, Yoshitaka, Musashino-shi, Tokyo, 180-8750, (JP)
(74) Representative: Winter, Brandl - Partnerschaft mbB

(57) **Abstract**

A first wired communication unit (511) has a wired connection function. A second wired communication unit (512) has the wired connection function. A third wired communication unit (513) has the wired connection function and is connected to a node (21). A wireless communication unit (514) has a wireless communication function connectable to a plurality of the wireless networks. An identification unit (5161) identifies whether an adjacent device connected to the first wired communication unit (511) or the second wired communication unit (512) via a wired network is a communication control device having the same function. A communication control unit (5162) establishes communication with another communication control device via the wireless network, and has a bridge function of transferring a communication frame to an appropriate destination among the first wired communication unit (511), the second wired communication unit (512), the third wired communication unit (513), and the wireless communication unit (514).

## Description

### FIELD

The present invention relates to a communication control device, a communication control method, a communication control program, and a communication control system.

### BACKGROUND

Conventionally, in order to make a communication network having a plurality of nodes redundant, a method of connecting each of the nodes to a plurality of routes in a wired manner has been known (see, for example, Japanese Patent Application Laid-open No. 2014-112977).

However, the related art has a problem that redundancy of a communication network may not be easily realized.

For example, in the related art, physical communication ports as many as the number of routes to be connected need to be provided in each node. On the other hand, there is a case where it is difficult to provide a plurality of communication ports for the reason of downsizing of the node or the like.

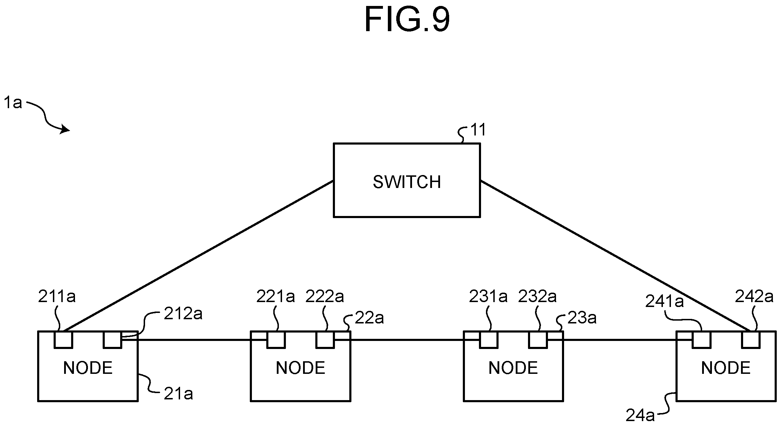

A conventional communication control system will be described with reference to FIG. 9. FIG. 9 is a view illustrating the conventional communication control system.

As illustrated in FIG. 9, a communication control system 1a includes a switch 11, a node 21a, a node 22a, a node 23a, and a node 24a.

Here, the nodes are devices that perform information processing and communication. The node may be rephrased as a computer or the like. In addition, a wired communication unit is a communication port.

The node 21a includes a wired communication unit 211a and a wired communication unit 212a. The wired communication unit 211a is connected to the switch 11. The wired communication unit 212a is connected to the node 22a.

The node 22a includes a wired communication unit 221a and a wired communication unit 222a. The wired communication unit 221a is connected to the node 21a. The wired communication unit 222a is connected to the node 23a.

The node 23a includes a wired communication unit 231a and a wired communication unit 232a. The wired communication unit 231a is connected to the node 22a. The wired communication unit 232a is connected to the node 24a.

The node 24a includes a wired communication unit 241a and a wired communication unit 242a. The wired communication unit 241a is connected to the node 23a. The wired communication unit 242a is connected to the switch 11.

As described above, the communication control system 1a has a network configuration made redundant by ring-type topology. However, as described above, in a case where a plurality of communication ports cannot be provided in a node, a network configuration in a manner illustrated in FIG. 9 cannot be realized.

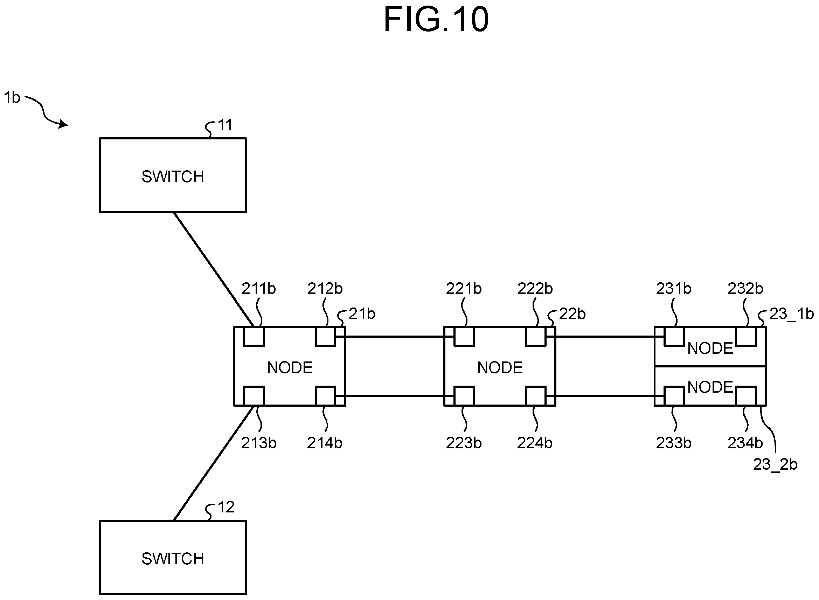

In addition, there is a case where a network is made redundant by topology illustrated in FIG. 10. As illustrated in FIG. 10, a communication control system 1b includes a switch 11, a switch 12, a node 21b, a node 22b, a node 23_1b, and a node 23_2b. The node 23_1b and the node 23_2b perform redundancy of the nodes themselves, and can exchange data with each other.

The node 21b includes a wired communication unit 211b, a wired communication unit 212b, a wired communication unit 213b, and a wired communication unit 214b. The wired communication unit 211b is connected to the switch 11. The wired communication unit 212b is connected to the node 22b. The wired communication unit 213b is connected to the switch 12. The wired communication unit 214b is connected to the node 22b.

The node 22b includes a wired communication unit 221b, a wired communication unit 222b, a wired communication unit 223b, and a wired communication unit 224b. The wired communication unit 221b is connected to the node 21b. The wired communication unit 222b is connected to the node 23_1b. The wired communication unit 223b is connected to the node 21b. The wired communication unit 224b is connected to the node 23_2b .

The node 23_1b includes a wired communication unit 231b and a wired communication unit 232b. The wired communication unit 231b is connected to the node 22b.

The node 23_2b includes a wired communication unit 233b and a wired communication unit 234b. The wired communication unit 233b is connected to the node 22b.

As described above, in order to realize redundancy in the conventional communication control systems, it is necessary to provide two to four communication ports in each device.

In one aspect, an object is to easily realize redundancy of a communication network.

### SUMMARY

According to an aspect of an embodiment, a communication control device includes: a first wired communication unit (511) having a wired connection function; a second wired communication unit (512) having the wired connection function; a third wired communication unit (513) that has the wired connection function and is connected to a node; a wireless communication unit (514) having a wireless communication function connectable to a plurality of wireless networks; an identification unit (5161) that identifies whether an adjacent device connected to the first wired communication unit (511) or the second wired communication unit (512) via a wired network is a communication control device having a same function; and a communication control unit (5162) that establishes communication via a wireless network with another communication control device, and has a bridge function of transferring a communication frame to an appropriate destination among the first wired communication unit (511), the second wired communication unit (512), the third wired communication unit (513), and the wireless communication unit (514).

According to an aspect of an embodiment, a communication control method executed by a communication control device including a first wired communication unit (511) having a wired communication function, a second wired communication unit (512) having the wired communication function, a third wired communication unit (513) that has the wired communication function and is connected to a node, and a wireless communication unit (514) having a wireless communication function connectable to a plurality of wireless networks, the method includes: a identification step of identifying whether an adjacent device connected to the first wired communication unit (511) or the second wired communication unit (512) via a wired network is a communication control device having a same function; and a communication control step of establishing communication via a wireless network with another communication control device and executing a bridge function of transferring a communication frame to an appropriate destination among the first wired communication unit (511), the second wired communication unit (512), the third wired communication unit (513), and the wireless communication unit (514).

According to an aspect of an embodiment, a communication control program causing a communication control device including a first wired communication unit (511) having a wired communication function, a second wired communication unit (512) having the wired communication function, a third wired communication unit (513) that has the wired communication function and is connected to a node, and a wireless communication unit (514) having a wireless communication function connectable to a plurality of wireless communication networks, to execute processing of: identifying whether an adjacent device connected to the first wired communication unit (511) or the second wired communication unit (512) via a wired network is a communication control device having a same function; and establishing communication via a wireless network with another communication control device and executing a bridge function of transferring a communication frame to an appropriate destination among the first wired communication unit (511), the second wired communication unit (512), the third wired communication unit (513), and the wireless communication unit (514).

According to an aspect of an embodiment, a communication control system includes: a first node; a first communication control device; a second node; and a second communication control device, wherein the first communication control device includes a first wired communication unit (511) having a wired communication function, a second wired communication unit (512) having the wired communication function, a third wired communication unit (513) having the wired communication function and connected to the first node, a first wireless communication unit (514) having a wireless communication function connectable to a plurality of wireless networks, and a first communication control unit that establishes communication via a wireless network with the second communication control device and transmits, to the second communication control device, a frame to be transmitted from the first communication control device to the second communication control device via both a wired network and the wireless network in a case where the first wired communication unit (511) or the second wired communication unit (512) is connected to the second communication control device via the wired network, and the second communication control device includes a fourth wired communication unit having the wired communication function, a fifth wired communication unit having the wired communication function, a sixth wired communication unit having the wired communication function and connected to the second node, a second wireless communication unit (514) having the wireless communication function connectable to the plurality of wireless networks, and a second communication control unit that establishes the communication via the wireless network with the first communication control device and transmits, to the first communication control device, a frame to be transmitted from the second communication control device to the first communication control device via both the wired network and the wireless network in a case where the fourth wired communication unit or the fifth wired communication unit is connected to the first communication control device via the wired network.

### BRIEF DESCRIPTION OF THE DRAWINGS

FIG. 1 is a view illustrating a configuration example of a communication control system according to a first embodiment;
FIG. 2 is a view illustrating a configuration example of the communication control system according to the first embodiment;
FIG. 3 is a view illustrating a configuration example of the communication control system according to the first embodiment;
FIG. 4 is a view illustrating the configuration example of the communication control system according to the first embodiment;
FIG. 5 is a view illustrating a configuration example of a communication control device according to the first embodiment;
FIG. 6 is a flowchart illustrating a flow of processing of the communication control device;
FIG. 7 is a flowchart illustrating a flow of processing of the communication control device;
FIG. 8 is a view for describing a hardware configuration example;
FIG. 9 is a view illustrating a conventional communication control system; and
FIG. 10 is a view illustrating a conventional communication control system.

### DESCRIPTION OF EMBODIMENTS

Hereinafter, embodiments of a communication control device, a communication control method, a communication control program, and a communication control system disclosed in the present application will be described in detail with reference to the drawings. Note that the invention of the present application is not limited by the embodiments described herein. In addition, the same elements are denoted by the same reference sign, and redundant description will be omitted as appropriate. In addition, the embodiments can be appropriately combined within a range without inconsistency.

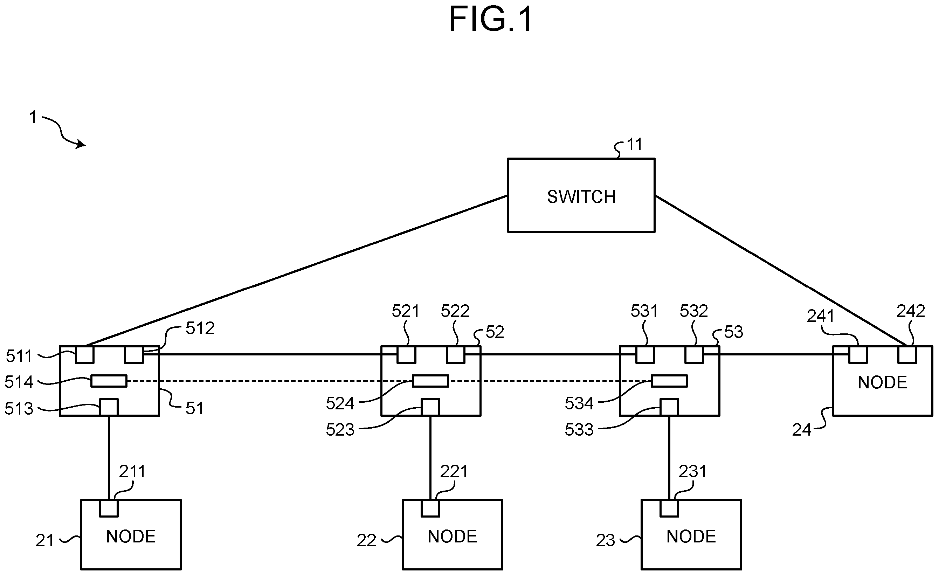

A configuration of a communication control system according to a first embodiment will be described with reference to FIG. 1. FIG. 1 is a view illustrating a configuration example of the communication control system according to the first embodiment.

As illustrated in FIG. 1, a communication control system 1 includes a switch 11, a node 21, a node 22, a node 23, and a node 24. Furthermore, each of the nodes may be connected to a sensor and an actuator.

Here, the nodes are devices that perform information processing and communication. The node may be rephrased as a computer or the like. In addition, the sensor transmits a detected sensor value, or a frame indicating a detection result based on the sensor value to the nodes by a predetermined communication protocol.

For example, the sensor and the actuator are included in a plant. The plant is, for example, a petroleum plant, a petrochemical plant, a chemical plant, or a gas plant. When the plant is operated, products such as liquefied natural gas (LNG), resin (such as plastic or nylon), and chemical products are acquired.

In addition, the plant includes, for example, a factory facility, a machine facility, a production facility, a power generation facility, a storage facility, and a facility at a well source of oil, natural gas, or the like. In addition, a facility device to generate a product is included in the plant.

The sensor acquires information related to a state of the plant. For example, the sensor is a temperature sensor, a pH sensor, a speed sensor, an acceleration sensor, an atmospheric pressure sensor, a gas concentration sensor, a device that detects a degree of opening of a valve, a device that detects a state (on or off) of a switch, or the like. The actuator drives the valve or the like.

Furthermore, for example, the node 21 transmits the frame acquired from the sensor to the node 22. The node 22 performs arithmetic processing. Furthermore, the node 22 transmits a result of the arithmetic processing (such as a control signal) to an actuator or the like connected to the node 23 via the node 23.

Note that the configuration and operation of the nodes included in the communication control system 1 are not limited to what has been described here. The nodes included in the communication control system 1 only need to perform communication of data with each other.

The node 21 includes a wired communication unit 211. The wired communication unit 211 is connected to a communication control device 51. The node 22 includes a wired communication unit 221. The wired communication unit 221 is connected to a communication control device 52. The node 23 includes a wired communication unit 231. The wired communication unit 231 is connected to a communication control device 53. The node 24 includes a wired communication unit 241 and a wired communication unit 242. The wired communication unit 241 is connected to the communication control device 53. The wired communication unit 242 is connected to the switch 11.

In such a manner, each of the node 21, the node 22, and the node 23 includes one wired communication unit. Furthermore, each of the wired communication units may include, for example, an Ethernet (registered trademark) port to which a local area network (LAN) cable is connected. Each of the node 21, the node 22, and the node 23 is a device having one communication port, that is, a 1 port device (DEV). On the other hand, the node 24 is a 2 port device (DEV) including a bridge having two communication ports.

Since the node is installed in a narrow place or a place with a limited available space, there may be restrictions such as miniaturization, weight reduction, and simplification of the configuration. Thus, it is not always possible to realize the 2 port DEV such as the node 24, and there is a case limited to the 1 port DEV.

According to the communication control device 51, the communication control device 52, and the communication control device 53 of the present embodiment, even in a case where there is one communication port provided in a node, a redundant network configuration is easily realized between nodes at least among the communication control device 51, the communication control device 52, and the communication control device 53.

The communication control device 51 includes a first wired communication unit 511, a second wired communication unit 512, a third wired communication unit 513, and a wireless communication unit 514. The first wired communication unit 511 is connected to the switch 11. The second wired communication unit 512 is connected to a wired communication unit 521 of the communication control device 52. The third wired communication unit 513 is connected to the wired communication unit 211 of the node 21.

The communication control device 52 includes the wired communication unit 521, a wired communication unit 522, a wired communication unit 523, and a wireless communication unit 524. The wired communication unit 521 is connected to the second wired communication unit 512 of the communication control device 51. The wired communication unit 522 is connected to a wired communication unit 531 of the communication control device 53. The wired communication unit 523 is connected to the wired communication unit 221 of the node 22.

The communication control device 53 includes the wired communication unit 531, a wired communication unit 532, a wired communication unit 533, and a wireless communication unit 534. The wired communication unit 531 is connected to the wired communication unit 522 of the communication control device 52. The wired communication unit 532 is connected to the wired communication unit 241 of the node 24. The wired communication unit 533 is connected to the switch 11.

Each of the wired communication units is, for example, a wired communication module. The wired communication module is a module having a communication function corresponding to a predetermined wired communication protocol, such as an Ethernet module, a fiber channel module, or a USB module. In addition, the wireless communication unit is a wireless communication module. The wireless communication module is a module having a communication function corresponding to a predetermined wireless communication protocol, such as a Wi-Fi (registered trademark) module, a Bluetooth (registered trademark) module, or a low power wide area (LPWA) module.

Each of the nodes and a communication control unit may be connected by a universal serial bus (USB) instead of the Ethernet. In this case, each of the wired communication unit 211, the third wired communication unit 513, the wired communication unit 221, the wired communication unit 523, the wired communication unit 231, and the wired communication unit 533 includes a USB port. Furthermore, the communication control device 51 can receive power supply from the node 21 via the USB port.

Operations of the communication control device 51, the communication control device 52, and the communication control device 53 will be described. Note that since the communication control device 51, the communication control device 52, and the communication control device 53 have the same function, the communication control device 51, the communication control device 52, and the communication control device 53 in the following description may be appropriately replaced. Processing similar to processing performed between the communication control device 51 and the communication control device 52 is performed between the communication control device 52 and the communication control device 53.

First, as illustrated in FIG. 1, the communication control device 51 is connected to the switch 11 and the node 21 via a wired network. Furthermore, the communication control device 52 is connected to the node 22 via the wired network. The communication control device 51 and the communication control device 52 are connected to the wired network including the switch 11. Note that a device (not illustrated) may be further connected to the wired network.

The communication control device 51 identifies whether an adjacent device to which the first wired communication unit 511 or the second wired communication unit 512 is connected via the wired network is a communication control device having the same function. For example, the communication control device 51 and the adjacent communication control device 52 exchange identification information indicating to be the specific communication control device having the same function, and identify each other.

The identification information is, for example, a MAC address, a device ID previously set in the device, or the like. The information exchange between the adjacent devices is performed by utilization of a protocol such as a link layer discovery protocol (LLDP). For example, the communication control device 51 identifies the communication control device 52 having a MAC address starting with a specific value or a device ID having a specific pattern as a communication control device having the same function.

Furthermore, at this time, it is assumed that the communication control device 52 identifies the communication control device 51 as another communication control device that satisfies a condition by a method similar to that of the communication control device 51. In this case, the communication control device 51 establishes communication with the identified communication control device via a wireless network. In a case of identifying the communication control device 52 as the communication control device that satisfies the condition, the communication control device 51 establishes wireless communication between the wireless communication unit 514 and the wireless communication unit 524.

For example, the communication control device 51 establishes communication with the communication control device 52 by performing Bluetooth pairing. Furthermore, for example, the communication control device 51 establishes communication with the communication control device 52 by using the self as an access point of Wi-Fi or by peer-to-peer connection.

As a result, as illustrated in FIG. 1, the communication control device 51 and the communication control device 52 are connected by both the wired network (solid line in FIG. 1) and the wireless network (dotted line in FIG. 1). Through similar processing, the communication control device 52 and the communication control device 53 are connected by both the wired network and the wireless network. As a result, a redundant network configuration is easily realized at least among the communication control device 51, the communication control device 52, and the communication control device 53.

Furthermore, the communication control device 51 transmits the frame, which is transmitted by the node 21 to the node 22, in both a route via the wired network and a route via the wireless network. Then, in a case where the same frame is received from the communication control device 51 via both the wired network and the wireless network, the communication control device 52 transfers the frame received earlier to the node 22 and discards the frame received later. At this time, similar processing is also performed at the time of frame transmission in a reverse direction, that is, in a case where a frame is transmitted from the node 22 to the node 21 via the communication control device 52 and the communication control device 51. As a result, even in a case where any of the frames does not arrive correctly, time-consuming processing such as retransmission of the frame or switching from an abnormal network to a normal network is unnecessary.

Such transfer and discard of the frame by the communication control system 1 may be realized by utilization of a method such as IEEE 802.1CB (Frame Replication and Elimination for Reliability).

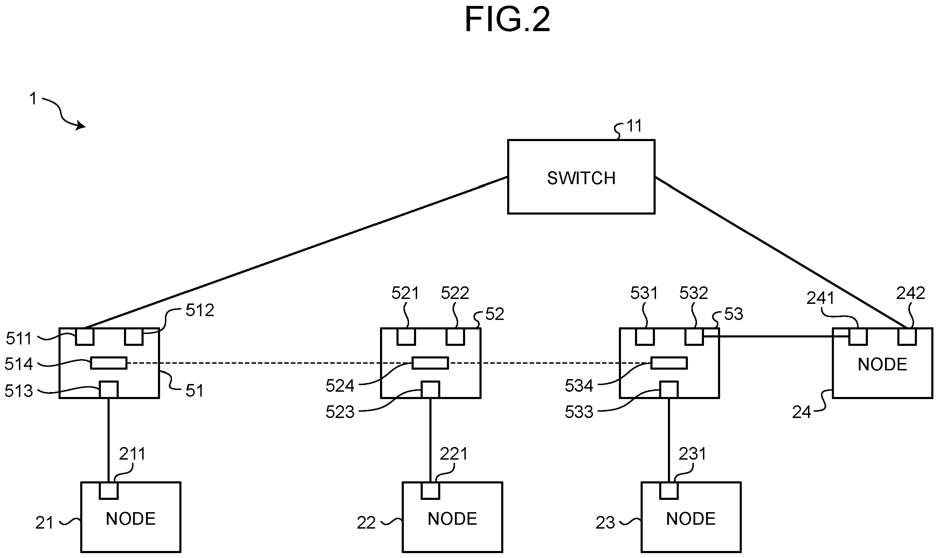

For example, as illustrated in FIG. 2, even in a case where there is no wired connection among the communication control device 51, the communication control device 52, and the communication control device 53 (such as a case where a communication cable is disconnected), wireless communication among the communication control device 51, the communication control device 52, and the communication control device 53 is not interrupted. FIG. 2 is a view illustrating a configuration example of the communication control system according to the first embodiment.

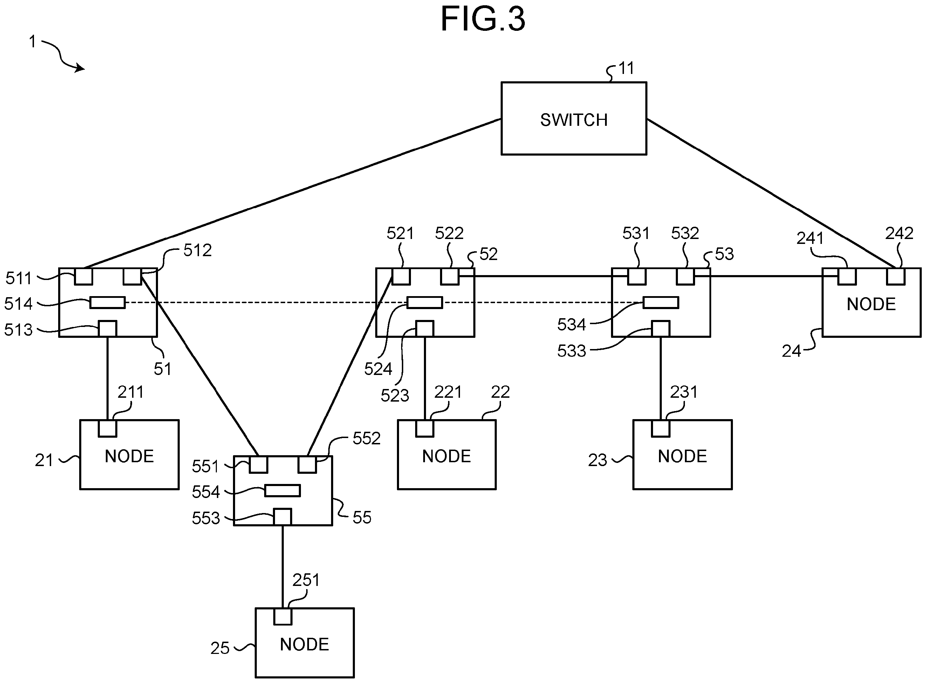

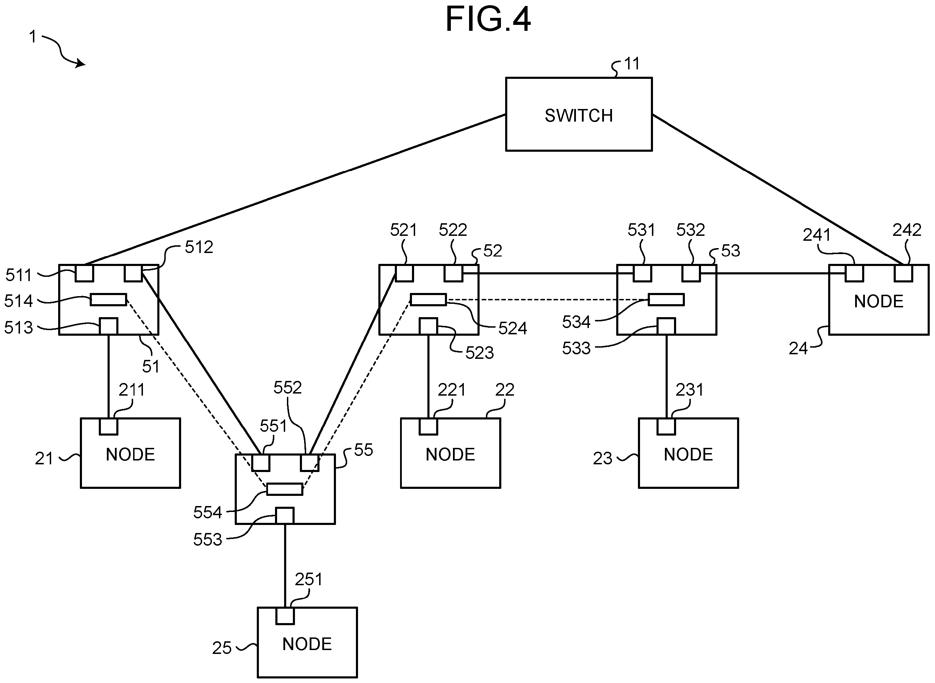

Even in a case where a node is newly added, the communication control system 1 can reconstruct a network including the node. An operation of the communication control system 1 in a case where a node is added will be described with reference to FIG. 3 and FIG. 4. FIG. 3 and FIG. 4 are views illustrating a configuration example of the communication control system according to the first embodiment.

As illustrated in FIG. 3, a case where a node 25 is added to the communication control system 1 together with a communication control device 55 will be considered. The node 25 includes a wired communication unit 251. Furthermore, the communication control device 55 includes a wired communication unit 551, a wired communication unit 552, a wired communication unit 553, and a wireless communication unit 554. The communication control device 55 has a function similar to that of the communication control device 51.

The wired communication unit 251 of the node 25 is connected to the wired communication unit 553 of the communication control device 55. The wired communication unit 551 of the communication control device 55 is connected to the second wired communication unit 512 of the communication control device 51. The wired communication unit 552 of the communication control device 55 is connected to the wired communication unit 521 of the communication control device 52.

Here, the communication control device 55 performs processing similar to that of the communication control device 51 described above. That is, in a case where the wired communication unit 551 or the wired communication unit 552 is connected to the wired network, the communication control device 55 identifies that an adjacent device connected via the wired network is a communication control device having the same function.

For example, the communication control device 55 identifies the communication control device 51 and the communication control device 52 as the communication control devices having the same function on the basis of predetermined identification information. Similarly, with connection with the communication control device 55 via the wired network being a trigger, the communication control device 51 and the communication control device 52 perform processing of identifying that the adjacent devices are communication control devices having the same function.

As a result, a redundant network in a manner illustrated in FIG. 4 is configured. In the example of FIG. 4, a redundant network is configured among the communication control device 51, the communication control device 55, the communication control device 52, and the communication control device 53.

As described above, after the communication via the wireless network is established between the second wired communication unit 512 and the communication control device 52 connected via the wired network, the communication control device 51 continues the communication via the wireless network with the communication control device 52 even in a case where the second wired communication unit 512 and the communication control device 55 are connected. Similarly, after the communication via the wireless network is established between the wired communication unit 521 and the communication control device 51 connected via the wired network, the communication control device 52 continues the communication via the wireless network with the communication control device 51 even in a case where the wired communication unit 521 and the communication control device 55 are connected. At this time, the communication control device 51 and the communication control device 52 do not perform communication via the communication control device 55, and only temporary communication between the communication control device 51 and the communication control device 55 and between the communication control device 52 and the communication control device 55 is performed. In a case where the communication control device 55 is identified as the communication control device having the same function through this temporary communication, communication via the wireless network is established between the communication control device 51 and the communication control device 55, and between the communication control device 52 and the communication control device 55. Furthermore, after being connected to the communication control device 55, the communication control device 51 and the communication control device 52 disconnect the communication established between the communication control device 51 and the communication control device 52 via the wireless network before establishing the communication via the wireless network. As a result, it is possible to add the new communication control device 55 between the communication control device 51 and the communication control device 52 while continuing the wireless communication between the communication control device 51 and the communication control device 52 without disconnecting the wireless communication.

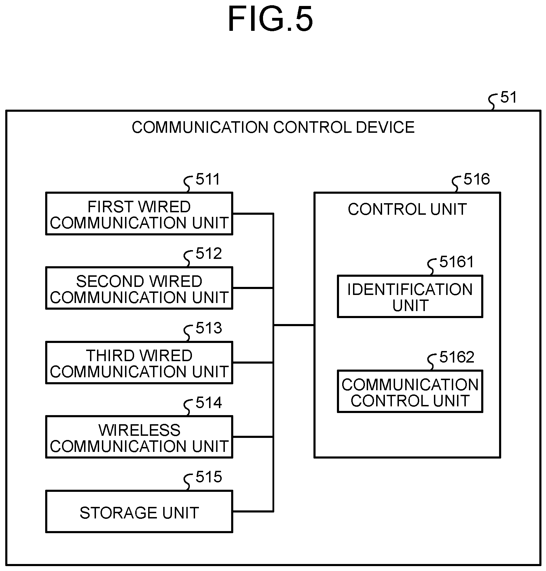

A configuration of the communication control device 51 will be described with reference to FIG. 5. FIG. 5 is a view illustrating a configuration example of the communication control device according to the first embodiment. Note that configurations of the communication control device 52, the communication control device 53, and the communication control device 55 are the same as the configuration of the communication control device 51.

As illustrated in FIG. 5, the communication control device 51 includes a first wired communication unit 511, a second wired communication unit 512, a third wired communication unit 513, a wireless communication unit 514, a storage unit 515, and a control unit 516. Note that portions such as "first" and "second" attached to the wired communication unit may be appropriately omitted.

The first wired communication unit 511 and the second wired communication unit 512 have a wired communication function. The third wired communication unit 513 has the wired communication function and is connected to the node 21. The wireless communication unit 514 has a wireless communication function.

The storage unit 515 stores various kinds of data, various programs executed by the control unit 516, and the like. For example, the storage unit 515 is a storage device such as a hard disk drive (HDD), a solid state drive (SSD), or a flash memory. The storage unit 515 stores, as necessary, various kinds of data generated in processing executed by the communication control device 51, such as data acquired in a process of execution of various kinds of processing by the control unit 516 and processing results acquired by the execution of the various kinds of processing.

The control unit 516 is a processing unit that controls the entire communication control device 51. The control unit 516 is an arithmetic device such as a central processing unit (CPU) including a processor, or a microcomputer. The control unit 516 includes an identification unit 5161 and a communication control unit 5162.

In a case where the first wired communication unit 511 or the second wired communication unit 512 is connected to the wired network, the identification unit 5161 identifies whether an adjacent device connected via the wired network is a communication control device having the same function. For example, the identification unit 5161 identifies whether the adjacent device is a communication control device having the same function on the basis of predetermined identification information.

Furthermore, the identification unit 5161 may identify a plurality of other communication control devices that is connected to the wired network and that satisfies the condition. In the example of FIG. 1, the communication control device 52 identifies the communication control device 51 and the communication control device 53. In addition, in this case, the communication control device 52 stores identification information that can identify both the communication control device 51 and the communication control device 53.

The communication control unit 5162 establishes the communication via the wireless network with the other communication control devices. In addition, the communication control unit 5162 has a bridge function of transferring a communication frame to an appropriate destination among the first wired communication unit 511, the second wired communication unit 512, the third wired communication unit 513, and the wireless communication unit 514. In addition, in a case where the same frame is received from another communication control device via both the wired network and the wireless network, the communication control unit 5162 transfers the frame received earlier to the node 21 and discards the frame received later. The node 21 may be rephrased as an appropriate destination.

Furthermore, in a case where the plurality of the communication control devices is identified by the identification unit 5161, the communication control unit 5162 establishes the communication via the wireless network with each of the plurality of communication control devices.

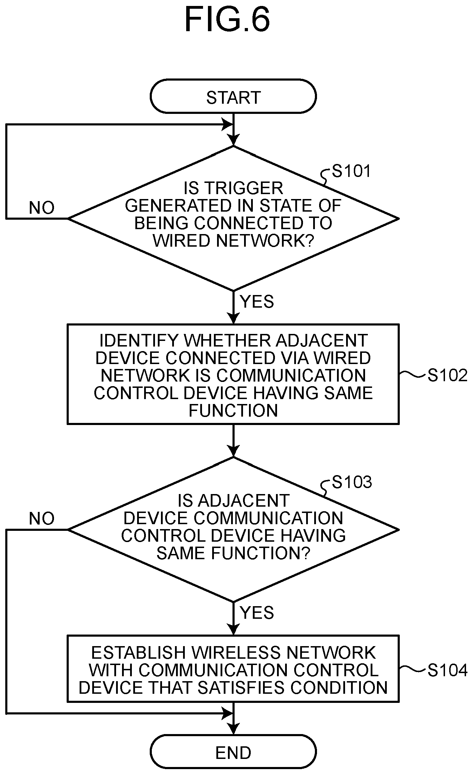

Processing in which the communication control device establishes the wireless network will be described with reference to FIG. 6. FIG. 6 is a flowchart illustrating a flow of processing of the communication control device.

As illustrated in FIG. 6, first, the communication control device 51 waits until a trigger is generated in a state of being connected to the wired network (Step S101, No). The trigger may be connection to the wired network, elapse of a certain period of time after the connection to the wired network, or performance of manual operation.

In a case where the trigger is generated (Step S101, Yes), the communication control device 51 identifies whether the adjacent device connected via the wired network is the communication control device having the same function (Step S102).

In a case where the adjacent device does not satisfy the condition (case of not being the communication control device having the same function) (Step S103, No), the communication control device 51 continues only communication via the wired network in the corresponding wired communication unit. Furthermore, the communication control device 51 may reset the trigger and return to the start. On the other hand, in a case where the adjacent device satisfies the condition (case of being the communication control device having the same function) (Step S103, Yes), the communication control device 51 establishes the wireless network with the communication control device that satisfies the condition (Step S104).

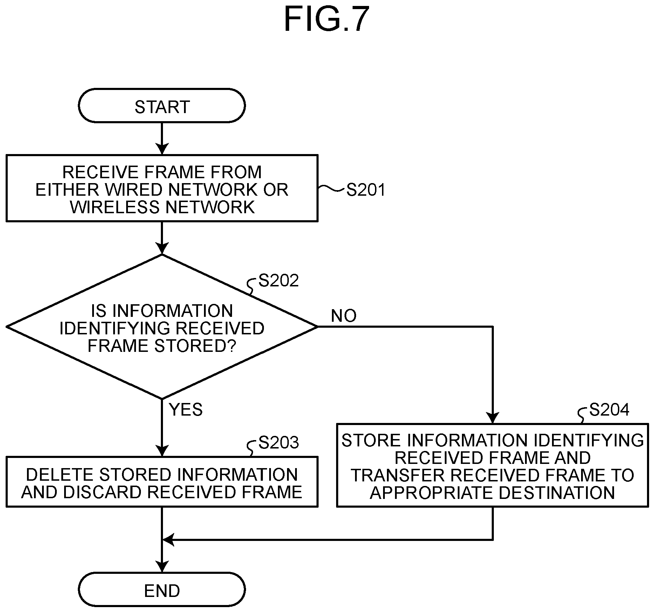

Processing in which the communication control device transfers a frame will be described with reference to FIG. 7. FIG. 7 is a flowchart illustrating a flow of processing of the communication control device.

As illustrated in FIG. 7, first, the communication control device 51 receives a frame from either the wired network or the wireless network (Step S201) .

In a case where information that identifies the received frame is stored in the storage unit 515 (Step S202, Yes), the communication control device 51 deletes the stored information and discards the received frame (Step S203). On the other hand, in a case where the information that identifies the received frame is not stored in the storage unit 515 (Step S202, No), the communication control device 51 stores the information that identifies the received frame in the storage unit 515, and transfers the received frame to an appropriate destination (Step S204). The information that identifies the frame is, for example, a hash value calculated from the entire frame, a sequence number intentionally inserted into the frame by the adjacent communication control device, or the like, and is removed from the frame before the transfer of the frame in a case where the information intentionally inserted into the frame is used.

The discard of the frame may be not transferring the received frame, not storing the received frame in the memory, or actively deleting the received frame.

As described above, the first wired communication unit 511 and the second wired communication unit 512 have the wired communication function. The third wired communication unit 513 has the wired communication function and is connected to the node 21. The wireless communication unit 514 has the wireless communication function connectable to a plurality of the wireless networks. In a case where the first wired communication unit 511 or the second wired communication unit 512 is connected to the wired network, the identification unit 5161 identifies whether an adjacent device connected via the wired network is a communication control device having the same function. The communication control unit 5162 establishes the communication via the wireless network with the other communication control device. As a result, even when there is one communication port provided in each of the nodes, it is possible to easily realize redundancy in a main route of the communication network.

In addition, the identification unit 5161 identifies another communication control device identified by predetermined identification information. As a result, the communication control device 51 can verify whether a condition that the adjacent device is a communication control device having the same function is satisfied, and can securely perform the identification.

Furthermore, in a case where the same frame is received from the other communication control device via both the wired network and the wireless network, the communication control unit 5162 transfers the frame received earlier to the node 21 and discards the frame received later. The node 21 may be rephrased as an appropriate destination. As a result, even in a case where any of the frames does not arrive correctly, the communication control unit 5162 does not need time-consuming processing such as retransmission of the frame or switching from an abnormal network to a normal network. As a result, stable operation of the communication can be realized.

### System

The processing procedure, control procedure, specific names, and information including various frames and parameters illustrated in the document and the drawings can be arbitrarily changed unless otherwise identified.

In addition, each component of each device illustrated in the drawings is functionally conceptual, and is not necessarily physically configured as illustrated in the drawings. That is, a specific forms of distribution/integration of the devices are not limited to those illustrated in the drawings. That is, all or a part thereof can be functionally or physically distributed/integrated in arbitrary units according to various loads, usage conditions, and the like.

Furthermore, all or an arbitrary part of each processing function performed in each of the devices may be realized by a CPU and a program analyzed and executed by the CPU, or may be realized as hardware by wired logic.

### Hardware

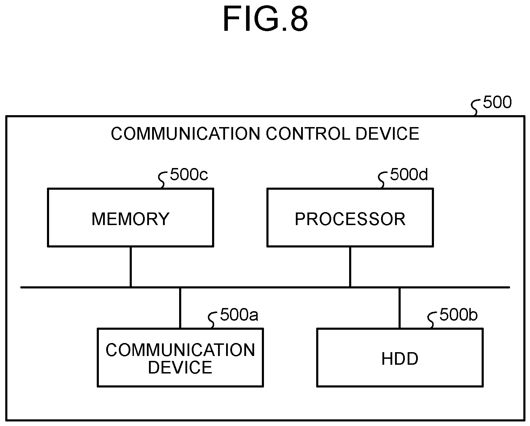

Next, a hardware configuration example of the communication control device 51 will be described. FIG. 8 is a view for describing the hardware configuration example. The communication control device 51 and the communication control device 52 have a hardware configuration similar to that of a communication control device 500 in FIG. 8.

As illustrated in FIG. 8, the communication control device 500 includes a communication device 500a, an HDD 500b, a memory 500c, and a processor 500d. In addition, the units illustrated in FIG. 8 are connected to each other by a bus or the like.

The communication device 500a is a network interface card or the like, and communicates with an external equipment or device. The HDD 500b stores programs and data causing the functions illustrated in FIG. 5 to operate.

The processor 500d reads a program for executing processing similar to that of each of the processing units illustrated in FIG. 5 from the HDD 500b or the like and develops the program in the memory 500c, and operates a process to execute each of the functions described with reference to FIG. 5 and the like. For example, this process executes a function similar to that of each of the processing units included in the communication control device 51. Specifically, the processor 500d reads programs having functions similar to those of the identification unit 5161 and the communication control unit 5162 from the HDD 500b or the like. Then, the processor 500d executes a process of executing processing similar to those of the identification unit 5161 and the communication control unit 5162.

As described above, the communication control device 51 operates as a communication control device that executes a communication control method by reading and executing the programs. Furthermore, the communication control device 51 can also realize functions similar to those of the above-described embodiment by reading the programs from a recording medium with a medium reading device and executing the read programs. Note that the programs referred to in this other embodiment are necessarily executed by the communication control device 51. For example, the present invention can be similarly applied to a case where another computer or server executes a program or a case where these execute the program in cooperation.

This program can be distributed via a network such as the Internet. In addition, this program is recorded on a computer-readable recording medium such as a hard disk, a flexible disk (FD), a CD-ROM, a magnetooptical disk (MO), or a digital versatile disc (DVD), and can be executed by being read from the recording medium by the computer.

Some examples of combinations of the disclosed technical features are described below.

According to an embodiment, redundancy of a communications network can be easily realized.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A communication control device comprising:
a first wired communication unit (511) having a wired connection function;
a second wired communication unit (512) having the wired connection function;
a third wired communication unit (513) that has the wired connection function and is connected to a node;
a wireless communication unit (514) having a wireless communication function connectable to a plurality of wireless networks;
an identification unit (5161) that identifies whether an adjacent device connected to the first wired communication unit (511) or the second wired communication unit (512) via a wired network is a communication control device having a same function; and
a communication control unit (5162) that establishes communication via a wireless network with another communication control device, and has a bridge function of transferring a communication frame to an appropriate destination among the first wired communication unit (511), the second wired communication unit (512), the third wired communication unit (513), and the wireless communication unit (514).

2. The communication control device according to claim 1, wherein
the identification unit (5161) identifies whether the adjacent device is the communication control device having the same function on a basis of predetermined identification information.

3. The communication control device according to claim 1, wherein
the identification unit (5161) identifies another communication control device having a MAC address starting with a specific value or another communication control device with a device ID having a specific pattern as the communication control device having the same function.

4. The communication control device according to claim 1, wherein
in a case of receiving a same frame from another communication control device via both the wired network and the wireless network, the communication control unit (5162) transfers a frame received earlier to an appropriate destination and discards a frame received later.

5. The communication control device according to claim 1, wherein
the communication control unit (5162) establishes the communication via the wireless network with the third communication control device in a case where the second wired communication unit (512) and the third communication control device are connected after the communication via the wireless network is established between the second wired communication unit (512) and the second communication control device connected via the wired network, and where the identification unit (5161) identifies the third communication control device.

6. The communication control device according to claim 5, wherein
after the second wired communication unit (512) and the third communication control device are connected, the communication control unit (5162) disconnects the communication established with the second communication control device via the wireless network before establishing the communication via the wireless network with the third communication control device.

7. A communication control method executed by a communication control device including
a first wired communication unit (511) having a wired communication function,
a second wired communication unit (512) having the wired communication function,
a third wired communication unit (513) that has the wired communication function and is connected to a node, and
a wireless communication unit (514) having a wireless communication function connectable to a plurality of wireless networks, the method comprising:
a identification step of identifying whether an adjacent device connected to the first wired communication unit (511) or the second wired communication unit (512) via a wired network is a communication control device having a same function; and
a communication control step of establishing communication via a wireless network with another communication control device and executing a bridge function of transferring a communication frame to an appropriate destination among the first wired communication unit (511), the second wired communication unit (512), the third wired communication unit (513), and the wireless communication unit (514).

8. A communication control program causing a communication control device including
a first wired communication unit (511) having a wired communication function,
a second wired communication unit (512) having the wired communication function,
a third wired communication unit (513) that has the wired communication function and is connected to a node, and
a wireless communication unit (514) having a wireless communication function connectable to a plurality of wireless communication networks,
to execute processing of:
identifying whether an adjacent device connected to the first wired communication unit (511) or the second wired communication unit (512) via a wired network is a communication control device having a same function; and
establishing communication via a wireless network with another communication control device and executing a bridge function of transferring a communication frame to an appropriate destination among the first wired communication unit (511), the second wired communication unit (512), the third wired communication unit (513), and the wireless communication unit (514).

9. A communication control system comprising: a first node; a first communication control device; a second node; and a second communication control device, wherein
the first communication control device includes
a first wired communication unit (511) having a wired communication function,
a second wired communication unit (512) having the wired communication function,
a third wired communication unit (513) having the wired communication function and connected to the first node,
a first wireless communication unit (514) having a wireless communication function connectable to a plurality of wireless networks, and
a first communication control unit that establishes communication via a wireless network with the second communication control device and transmits, to the second communication control device, a frame to be transmitted from the first communication control device to the second communication control device via both a wired network and the wireless network in a case where the first wired communication unit (511) or the second wired communication unit (512) is connected to the second communication control device via the wired network, and
the second communication control device includes
a fourth wired communication unit having the wired communication function,
a fifth wired communication unit having the wired communication function,
a sixth wired communication unit having the wired communication function and connected to the second node,
a second wireless communication unit (514) having the wireless communication function connectable to the plurality of wireless networks, and
a second communication control unit that establishes the communication via the wireless network with the first communication control device and transmits, to the first communication control device, a frame to be transmitted from the second communication control device to the first communication control device via both the wired network and the wireless network in a case where the fourth wired communication unit or the fifth wired communication unit is connected to the first communication control device via the wired network.

10. The communication control system according to claim 9, wherein
in a case where same frames are received from the second communication control device via both the wired network and the wireless network, the first communication control unit transfers a frame received earlier to an appropriate destination and discards a frame received later, and
in a case where same frames are received from the first communication control device via both the wired network and the wireless network, the second communication control unit transfers a frame received earlier to an appropriate destination and discards a frame received later.
